# DEMANDE DE BREVET EUROPEEN

(11) **EP 2 339 505 A1**
(43) Date de publication de la demande: **29.06.2011**
(21) Numéro de dépôt: 10197010.1
(22) Date de dépôt: 24.12.2010
(51) Int. Cl.: G06K 7/08, H01B 7/06

(54) **Tête de lecture magnétique connecté à un circuit imprimée utilisant une nappe de conducteurs flexible dans toutes les directions**

(30) Priorité: 28.12.2009 FR 0959619
(71) Demandeur: Compagnie Industrielle et Financière d'Ingénierie "Ingenico", 92200 Neuilly sur Seine (FR)
(72) Inventeur: Pavageau, Stéphane, 26600, LA ROCHE DE GLUN (FR); Bonnet, Eric, 26120, MALLISSARD (FR); Yernaux, Olivier, 92200, NEUILLY SUR SEINE (FR)
(74) Mandataire: de Beaumont, Michel

(57) **Abrégé**

L'invention concerne un dispositif de connexion électrique, comprenant : des premiers conducteurs en nappe (23), la nappe étant enroulée de façon à prendre la forme d'un enroulement hélicoïdal ; et d'un côté de la nappe formant la paroi extérieure de l'enroulement hélicoïdal, un dispositif anti-intrusion.

## Description

### Domaine de l'invention

La présente invention concerne un dispositif de connexion entre deux éléments d'un système électronique. Elle vise plus particulièrement, dans un terminal de paiement électronique portatif, la connexion d'une tête de lecture magnétique à une carte de circuit imprimé.

### Exposé de l'art antérieur

Les terminaux de paiement électronique comprennent généralement un boîtier, contenant notamment une carte de circuit imprimé, à laquelle sont reliés différents éléments tels qu'un clavier, un écran d'affichage, un lecteur de carte à puce, une imprimante, etc.

Certains terminaux sont adaptés à lire des cartes munies de pistes magnétiques, ou cartes magnétiques. Dans ce cas, il est prévu un lecteur de carte magnétique, ayant par exemple la forme d'une fente, ouverte à ses extrémités, dans laquelle un utilisateur peut faire défiler une carte magnétique. Une tête de lecture magnétique connectée au circuit imprimé du terminal affleure une paroi interne de la fente. La tête de lecture permet de lire et/ou écrire des données stockées sur une piste magnétique de la carte de l'utilisateur, lors du défilement de la carte dans la fente.

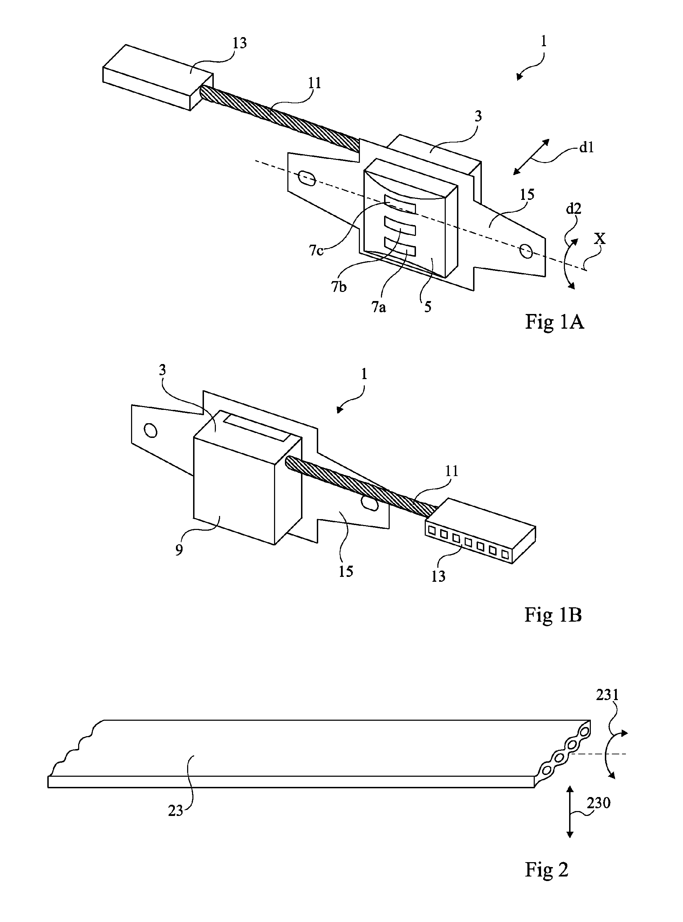

Les figures 1A et 1B sont des vues en perspective représentant de façon schématique une tête de lecture magnétique 1 telle qu'on peut en trouver dans les terminaux de paiement électronique actuels.

La tête de lecture 1 comprend un boîtier 3 de forme générale sensiblement parallélépipédique, contenant notamment des enroulements conducteurs (non représentés). Le boîtier 3 comprend une face avant 5, destinée à affleurer une paroi interne de la fente du lecteur. La face avant 5 est légèrement convexe, de façon que la carte magnétique puisse glisser contre cette face sans risquer d'accrocher le boîtier 3. La face avant 5 comprend une ou plusieurs zones de lecture, trois zones 7a, 7b, 7c dans cet exemple, positionnées à des hauteurs différentes de façon à lire et/ou écrire sur des pistes magnétiques positionnées à des hauteurs différentes de la carte. Ceci permet au lecteur d'être compatible avec différents types de cartes magnétiques. Du côté de sa face arrière, le boîtier 3 peut être fermé par une tôle de protection 9 (figure 1B).

Un toron 11 de fils de connexion électrique est prévu du côté d'une face latérale du boîtier 3. Le toron 11 est formé d'une pluralité de fils torsadés, par exemple de 3 à 20 fils. Chaque fil du toron est connecté d'une part à une borne de la tête de lecture, interne au boîtier 3, par exemple une borne d'entrée/sortie ou une borne d'alimentation, et d'autre part à un connecteur extérieur 13. Le connecteur 13 est adapté à être branché à une carte de circuit imprimé du terminal de paiement.

La tête de lecture 1 est destinée à être fixée au boîtier du terminal de paiement par un système à ressort. Dans cet exemple, le boîtier 3 de la tête de lecture est monté sur une lame ressort 15, elle-même destinée à être fixée, par ses extrémités, au boîtier du terminal de paiement. Un tel montage à ressort permet de garantir un bon positionnement de la carte de l'utilisateur par rapport à la tête de lecture, de façon à garantir de bonnes conditions de lecture/écriture. Il résulte d'un tel montage que la tête de lecture magnétique est mobile par rapport au boîtier du terminal de paiement, et, par conséquent, par rapport au circuit imprimé auquel elle est connectée. En particulier, la tête de lecture est mobile selon un degré de liberté en translation d1, suivant un axe orthogonal aux faces avant et arrière de la tête de lecture. En outre, la tête de lecture est mobile selon un degré de liberté en rotation d2, autour d'un axe X défini par les deux points de fixation de la lame ressort 15 au boîtier du terminal.

De nombreux mécanismes de sécurité peuvent être prévus pour prévenir une utilisation frauduleuse du terminal de paiement, et notamment de la tête de lecture magnétique. A titre d'exemple, on peut prévoir, sous la tôle de protection 9, des mécanismes de détection d'intrusion visant à empêcher un attaquant d'accéder aux signaux électriques qui transitent par les bornes d'entrée/sortie de la tête de lecture. De plus, à l'intérieur du boîtier 3, les bornes de la tête de lecture, auxquelles sont reliés les conducteurs formant le toron 11, sont généralement noyées dans une résine rigide et opaque de façon à en protéger l'accès. On peut également prévoir des mécanismes visant à détecter une déconnexion de la tête de lecture, pour empêcher son remplacement par une tête frauduleuse.

Un inconvénient des têtes de lecture magnétiques du type décrit ci-dessus est que la connexion par toron de fils est mal adaptée à un environnement sécurisé d'un terminal de paiement. A titre d'exemple, un attaquant pourrait intercepter un signal électrique circulant dans un ou plusieurs fils du toron 11 à l'aide d'une pointe conductrice venant percer la gaine isolante d'un fil du toron.

La connexion par toron présente en outre l'inconvénient d'être onéreuse. En effet, la fabrication d'une tête de lecture du type décrit ci-dessus nécessite des étapes minutieuses de connexion des conducteurs formant le toron 11 aux bornes de la tête de lecture et au connecteur 13.

On notera qu'en raison de la mobilité de la tête de lecture par rapport au circuit électronique du terminal de paiement, il n'est pas possible de prévoir une connexion par soudure directe de bornes de la tête de lecture à des plages de contact d'un circuit imprimé du terminal.

Le document FR-A-2567308 décrit un câble électrique blindé sous la forme d'un cordon extensible.

### Résumé

Ainsi, un objet d'un mode de réalisation de la présente invention est de pallier, au moins en partie, aux inconvénients des terminaux de paiement actuels adaptés à la lecture de cartes magnétiques.

Un objet d'un mode de réalisation de la présente invention est de prévoir un dispositif de connexion d'une tête de lecture magnétique à un circuit électronique d'un terminal de paiement, palliant au moins en partie aux inconvénients des solutions actuelles.

Un objet d'un mode de réalisation de la présente invention est de prévoir un tel dispositif présentant une sécurité renforcée par rapport aux solutions actuelles.

Un objet d'un mode de réalisation de la présente invention est de prévoir un tel dispositif facile à réaliser.

Ainsi, un mode de réalisation de la présente invention prévoit un dispositif de connexion électrique, comprenant : des premiers conducteurs en nappe, la nappe ayant la forme d'un enroulement hélicoïdal ; et d'un côté de la nappe formant la paroi extérieure de l'enroulement hélicoïdal, un dispositif anti-intrusion.

Selon un mode de réalisation de la présente invention, ce dispositif est adapté à connecter une tête de lecture magnétique à un circuit électronique.

Selon un mode de réalisation de la présente invention, la nappe comprend des conducteurs parallèles disposés sur un circuit imprimé souple.

Selon un mode de réalisation de la présente invention, le dispositif anti-intrusion comprend une pluralité de seconds conducteurs disposé du côté de la face de la nappe formant la paroi extérieure de l'enroulement hélicoïdal.

Selon un mode de réalisation de la présente invention, les seconds conducteurs sont plus fins et plus serrés que les premiers conducteurs.

Selon un mode de réalisation de la présente invention, le dispositif de connexion électrique comprend en outre un dispositif anti-intrusion du côté intérieur de l'enroulement hélicoïdal.

Un mode de réalisation de la présente invention prévoit une tête de lecture magnétique munie du dispositif de connexion électrique susmentionné.

Selon un mode de réalisation de la présente invention, le dispositif de connexion électrique est disposé du côté d'une face latérale de la tête.

Un mode de réalisation de la présente invention prévoit un terminal de paiement électronique comportant un circuit électronique et la tête de lecture magnétique susmentionnée.

Selon un mode de réalisation de la présente invention, la tête de lecture est mobile par rapport au circuit électronique.

Selon un mode de réalisation de la présente invention : la tête de lecture est de forme générale parallélépipédique et comporte des faces avant, arrière, et latérales, orthogonales au plan du circuit électronique ; la tête de lecture est mobile par rapport au circuit électronique selon une direction orthogonale aux faces avant et arrière ; le dispositif de connexion électrique est connecté à la tête de lecture par un premier connecteur disposé du côté d'une face latérale de la tête de lecture ; et le dispositif de connexion électrique est connecté au circuit électronique par un second connecteur, un décalage latéral séparant le premier connecteur du second connecteur.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
les figures 1A et 1B, décrites précédemment, sont des vues en perspective schématiques d'une tête de lecture magnétique usuelle ;
la figure 2 est une vue en perspective schématique d'une nappe de connexion électrique ;
les figures 3A et 3B sont des vues de dessus et de face représentant de façon très schématique une tête de lecture magnétique, une carte de circuit imprimé d'un terminal de paiement, et la connexion électrique reliant la tête de lecture au circuit imprimé ;
la figure 4 est une vue en perspective d'un mode de réalisation d'un dispositif de connexion électrique adapté à connecter une tête de lecture magnétique à une carte de circuit imprimé d'un terminal de paiement ; et
la figure 5 est une vue en coupe d'une variante de réalisation d'un dispositif de connexion électrique du type décrit en relation avec la figure 4.

### Description détaillée

Par souci de clarté, de mêmes éléments ont été désignés par de mêmes références aux différentes figures et, de plus, comme cela est habituel dans la représentation des composants électroniques, les diverses figures ne sont pas tracées à l'échelle.

Pour remplacer la connexion par toron de fils torsadés, entre une tête de lecture magnétique d'un terminal de paiement et une carte de circuit imprimé de ce terminal, les inventeurs proposent d'utiliser des conducteurs en nappe, de préférence des conducteurs réalisés sur un circuit imprimé souple.

Toutefois, l'utilisation de conducteurs en nappe pose un problème mécanique lié aux faibles dimensions de l'espace disponible entre la tête de lecture et la carte de circuit imprimé du terminal, et à la rigidité de la nappe dans certaines directions. En effet, du fait de la compacité des terminaux de paiement, la distance entre la tête magnétique et le circuit imprimé est faible, ce qui impose d'utiliser une nappe très courte, et par conséquent présentant peu de souplesse.

La figure 2 est une vue en perspective représentant de façon schématique une nappe 23 de connexion électrique, adaptée à connecter deux éléments d'un système électronique. La nappe 23 comprend un ensemble de conducteurs indépendants, parallèles entre eux et disposés dans un même plan de façon à former un câble plat. Les extrémités de la nappe 23 sont destinées à être reliées à des connecteurs, ou connectées par soudure.

La nappe 23 est flexible dans une seule direction 230 orthogonale au plan de la nappe, et rigide dans toutes les autres directions. La nappe 23 est également flexible en torsion selon un degré de liberté 231, autour d'un axe parallèle aux fils conducteurs.

On préfère généralement les dispositifs de connexion de type nappe par rapport aux torons de fils torsadés car ils sont plus faciles à fabriquer sans opérations manuelles, et donc moins coûteux. En outre, dans le cas d'une nappe réalisée sur un circuit imprimé souple, un autre avantage réside dans la très faible épaisseur du dispositif, par exemple de l'ordre de 0,2 mm.

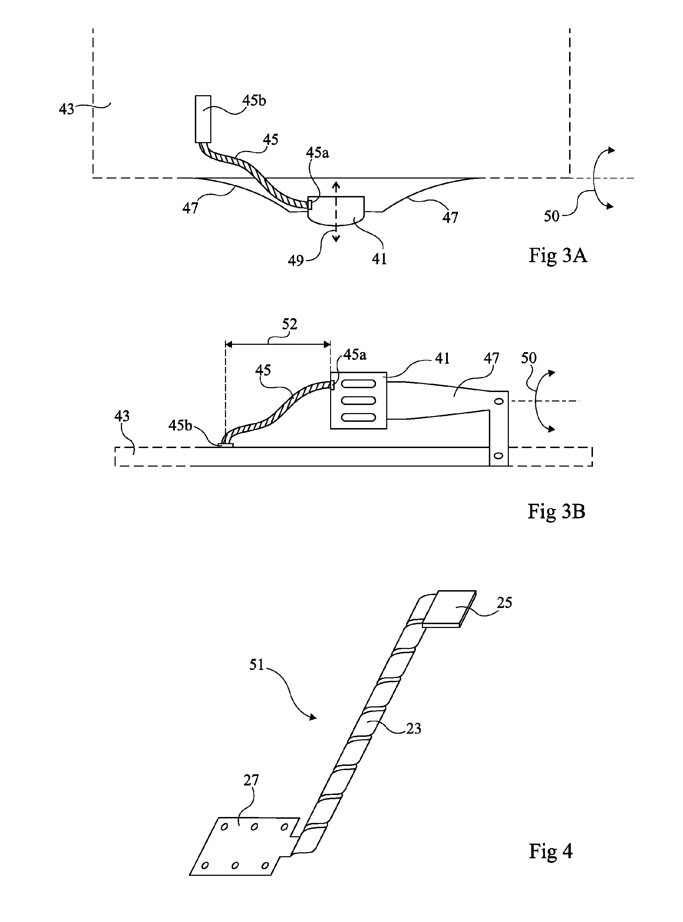

Les figures 3A et 3B sont des vues de dessus et de face représentant de façon très schématique une tête de lecture magnétique 41, une carte de circuit imprimé 43 d'un terminal de paiement, et la connexion électrique 45 reliant la tête de lecture au circuit imprimé. La tête de lecture 41 est fixée mécaniquement au circuit imprimé ou au boîtier contenant le circuit imprimé, par un système à ressort, comprenant par exemple une plaque métallique flexible 47, ou lame ressort. Dans l'exemple représenté sur les figures 3A et 3B, la plaque flexible 47 est fixée directement à la carte de circuit imprimé 43, toutefois, on pourra prévoir de fixer la plaque 47 à un autre support, par exemple au boîtier du terminal. Pour plus de clarté, la lame ressort 47 n'est représentée que partiellement en figure 3B. La tête de lecture 41 est mobile selon une direction 49 (figure 3A) orthogonale à ses faces avant et arrière et parallèle au plan du circuit imprimé. La tête de lecture 41 est également mobile selon un degré de liberté en rotation 50, autour d'un axe défini par les points de fixation de la lame 47 au circuit imprimé 43. Le dispositif de connexion électrique 45 est relié à la tête de lecture 41 en une région 45a, par exemple par soudure, et à la carte de circuit imprimé 43 en une région 45b, par exemple via un connecteur.

La tendance actuelle vers une miniaturisation des terminaux de paiement impose des contraintes strictes de positionnement des différents éléments. En particulier, dans la pratique, la région de connexion 45a est souvent placée du côté d'une face latérale de la tête de lecture 41. En outre, comme cela ressort de la figure 3B, il existe un décalage de hauteur, ainsi qu'un décalage latéral 52 entre la région de connexion 45a et la région de connexion 45b.

Ainsi, pour pouvoir relier la tête de lecture 41 au circuit imprimé 43, tout en garantissant la liberté de mouvement de la tête 41 selon les directions 49 et 50, le dispositif de connexion électrique 45 doit être flexible selon plusieurs directions appartenant à des plans distincts.

La nappe décrite en relation avec la figure 2 est flexible uniquement selon les directions 230 et 231 (figure 2). Ainsi, elle n'est pas adaptée à la connexion d'une tête de lecture magnétique à une carte de circuit électronique d'un terminal de paiement. Elle ne permet notamment pas de relier la tête de lecture au circuit imprimé du terminal dans le cas ou il existe un décalage latéral 52 (figure 3B) entre la région 45a de connexion de la tête de lecture et la carte de circuit imprimé. En effet, une telle connexion nécessite une flexion de la nappe dans une direction où celle-ci ne possède pas de souplesse.

La figure 4 est une vue en perspective schématique illustrant un mode de réalisation d'un dispositif 51 de connexion électrique en nappe, adapté à connecter une tête de lecture magnétique à une carte de circuit imprimé d'un terminal de paiement. Le dispositif de connexion 51 comprend une nappe 23 identique à celle décrite en relation avec la figure 2, à la différence qu'elle a été enroulée de façon à prendre la forme d'un enroulement hélicoïdal.

Une extrémité de la nappe 23 est reliée à une partie plus rigide 25, ou raidisseur, adaptée à être branchée à un connecteur d'une carte de circuit électronique d'un terminal de paiement. L'autre extrémité de la nappe 23 est reliée à une région de connexion 27, adaptée à être connectée aux bornes d'une tête de lecture magnétique du type décrit en relation avec les figures 1A et 1B. Le connecteur 27 pourra comprendre une carte de circuit imprimé, adaptée à être placée sous la tôle de protection 9 (figure 1B), et sur laquelle auront été prévues des plages métalliques adaptées à venir en contact avec des bornes de la tête de lecture.

Selon un avantage de ce mode de réalisation, la forme en enroulement hélicoïdal de la nappe 23 rend le dispositif de connexion 51 flexible dans toutes les directions. Ainsi, un tel dispositif est adapté à connecter une tête de lecture magnétique à une carte de circuit imprimé d'un terminal de paiement, même lorsqu'il existe un décalage de hauteur entre la région de connexion du dispositif à la tête de lecture, et la région de connexion du dispositif à la carte de circuit imprimé.

Un autre avantage induit par l'utilisation d'une nappe est qu'elle peut comprendre des mécanismes de sécurité, par exemple un détecteur d'intrusion visant à empêcher un attaquant d'intercepter les signaux qui transitent dans les fils conducteurs.

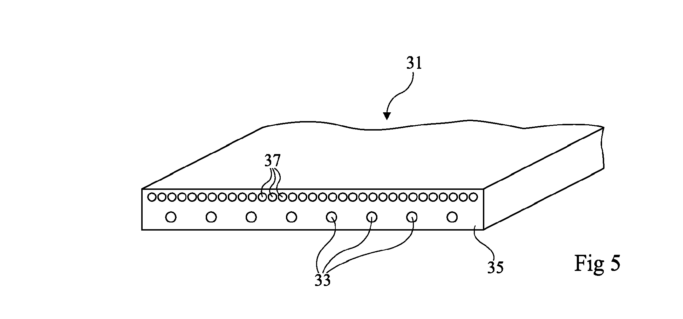

La figure 5 est une vue en coupe représentant de façon schématique un mode de réalisation d'un dispositif 31 de connexion électrique en nappe, comprenant un détecteur d'intrusion. Le dispositif 31 comprend un ensemble de fils conducteurs 33, parallèles entre eux et disposés dans un même plan de façon à former une nappe. Les fils 33 sont disposés dans un matériau isolant de support 35. D'un côté de la nappe (dans cet exemple la face supérieure), un réseau de fils conducteurs 37, plus fins et plus serrés que les fils 33, forme un écran adapté à protéger les fils 33 contre des tentatives d'intrusion. Si un attaquant essaye de prendre un contact sur un fil 33, par la face supérieure de la nappe, à l'aide d'une pointe conductrice venant percer la gaine isolante 35, des fils 37 vont être rompus ou mis en court-circuit. Un dispositif, relié aux fils 37, est adapté à détecter un tel évènement. Ce détecteur est par exemple disposé sur la carte de circuit imprimé du terminal.

Les inventeurs proposent d'utiliser la nappe 31 pour former une nappe enroulée du type décrit en relation avec la figure 4, dans laquelle les fils 37 du détecteur d'intrusion sont disposés du côté de la nappe formant la paroi extérieure de l'enroulement hélicoïdal. La protection de l'autre face de la nappe est assurée par la forme tubulaire de l'enroulement hélicoïdal, qui rend difficile voire impossible l'accès à cette face.

On pourra également prévoir un mode de réalisation particulièrement sécurisé dans lequel un dispositif anti-intrusion sera placé sur chaque face de la nappe torsadée.

Des modes de réalisation particuliers de la présente invention ont été décrits. Diverses variantes et modifications apparaîtront à l'homme de l'art. En particulier, l'invention ne se restreint pas au cas décrit ci-dessus de la connexion d'une tête de lecture magnétique à une carte de circuit imprimé d'un terminal de paiement électronique portatif. Le dispositif de connexion proposé pourra être utilisé pour connecter entre eux d'autres éléments. On notera qu'un tel dispositif est particulièrement avantageux pour connecter deux éléments mobiles l'un par rapport à l'autre, dans un environnement sécurisé, et en conservant une certaine souplesse.

## Revendications

1. Tête de lecture magnétique munie d'un dispositif de connexion électrique (51), ce dispositif comprenant :
des premiers conducteurs en nappe (23), la nappe ayant la forme d'un enroulement hélicoïdal ; et
un dispositif anti-intrusion comprenant une pluralité de seconds conducteurs (37) disposés du côté de la face de la nappe formant la paroi extérieure de l'enroulement hélicoïdal, les seconds conducteurs étant plus fins et plus serrés que les premiers conducteurs.

2. Tête (41) selon la revendication 1, adaptée à être connectée à un circuit électronique (43).

3. Tête selon la revendication 1 ou 2, dans laquelle la nappe comprend des conducteurs parallèles disposés sur un circuit imprimé souple.

4. Tête selon l'une quelconque des revendications 1 à 3, dans laquelle ledit dispositif de connexion électrique comprend en outre un dispositif anti-intrusion du côté intérieur de l'enroulement hélicoïdal.

5. Tête selon l'une quelconque des revendications 1 à 4, dans laquelle ledit dispositif de connexion électrique est disposé du côté d'une face latérale de la tête.

6. Terminal de paiement électronique comportant un circuit électronique (43) et une tête de lecture magnétique (41) selon l'une quelconque des revendications 1 à 5.

7. Terminal selon la revendication 6, dans lequel la tête de lecture (41) est mobile par rapport au circuit électronique (43).

8. Terminal selon la revendication 6 ou 7, dans lequel :
la tête de lecture (41) est de forme générale parallélépipédique et comporte des faces avant (5), arrière (9), et latérales, orthogonales au plan du circuit électronique ;
la tête de lecture est mobile par rapport au circuit électronique selon une direction (49) orthogonale aux faces avant et arrière ;
le dispositif de connexion électrique est connecté à la tête de lecture par un premier connecteur disposé du côté d'une face latérale de la tête de lecture ; et
le dispositif de connexion électrique est connecté au circuit électronique par un second connecteur, un décalage latéral (52) séparant le premier connecteur du second connecteur.
